# EUROPÄISCHE PATENTANMELDUNG

(11) **EP 0 682 078 A2**
(43) Veröffentlichungstag der Anmeldung: **15.11.1995**
(21) Anmeldenummer: 95106775.0
(22) Anmeldetag: 05.05.1995
(51) Int. Cl.: C08L 25/02, C08J 9/18

(54) **Expandierbare Styrolpolymerisate**

(30) Priorität: 13.05.1994 DE 4416861
(71) Anmelder: BASF Aktiengesellschaft, D-67063 Ludwigshafen (DE)
(72) Erfinder: Henn, Rolf, Dr., D-68775 Ketsch (DE); Hahn, Klaus, Dr., D-67281 Kirchheim (DE); Loth, Wolfgang, Dr., D-67098 Bad Dürkheim (DE); Heckmann, Walter, Dr., D-69469 Weinheim (DE); Blumenstein, Uwe, Dr., D-55288 Schornsheim (DE); Schwaben, Hans-Dieter, Dr., D-67361 Freisbach (DE); Wassmer, Karl-Heinz, Dr., D-67117 Limburgerhof (DE); Tatzel, Hermann, D-69469 Weinheim (DE)

(57) **Zusammenfassung**

Gegenstand der Erfindung sind expandierbare Styrolpolymerisate für elastische Polystyrolschäume, enthaltend
a) 75 bis 98 Gew.-% Polystyrol und/oder eines Styrolcopolymerisates mit mindestens 50 % einpolymerisiertem Polystyrol,
b) 2 bis 25 Gew.-%, mindestens eines styrollöslichen Elastomeren,
c) 1 bis 15 Gew.-%, bezogen auf die Summe aus a) und b), eines niedrigsiedenden Treibmittels, sowie gegebenenfalls
d) übliche Zusatzstoffe in wirksamen Mengen,
wobei die unverschäumten Perlen eine Struktur aufweisen, bei der die Elastomerphase in Form von Zellteilchen in der Polystyrolphase dispergiert ist, sowie daraus hergestellte Schaumstoffe und Schaumstofformteile.

## Beschreibung

Die Erfindung betrifft expandierbare Styrolpolymerisate, die zur Herstellung von elastischen Schaumstoffen geeignet sind.

Schaumstoffe auf Basis von Polystyrol haben als Wärmedämm- und Verpackungsmaterial eine große technische Bedeutung erlangt. Sie werden großtechnisch dadurch hergestellt, daß man zunächst durch Suspensionspolymerisation von Styrol in Gegenwart eines Treibmittels expandierbare Styrolpolymerisate herstellt, diese durch Erhitzen zu Schaumstoffpartikeln aufschäumt und anschließend in Formen zu Formteilen verschweißt.

Polystyrolschaumstoffe sind harte Schaumstoffe. Ihre geringe Elastizität ist für viele Anwendungen, beispielsweise auf dem Verpackungsgebiet, nachteilig, da bei Stoß- und Schlagbeanspruchung ein Schutz des verpackten Guts nicht mehr ausreichend möglich ist und es bei Deformation der Schaumstoffteile zu deren Bruch kommen kann.

Es gab daher in der Vergangenheit bereits Versuche, die Elastizität von Polystyrolschaumstoffen zu erhöhen.

Ein Verfahren, Schaumstoffe aus Polystyrol zu elastifizieren, wird in EP-A 561 216 beschrieben. Hierbei werden Schaumstoffblöcke der Dichte 8 - 12 kg/m³ auf etwa 1/3 ihrer Abmessungen gestaucht und danach wieder entspannt. Daraus geschnittene Platten besitzen eine erhöhte Elastizität und werden beispielsweise zur Trittschalldämmung verwendet. Verfahrensbedingt ist jedoch eine Übertragung dieser Arbeitsweise auf Formteile kaum zu realisieren und wird daher nicht durchgeführt.

In US-A-4,424,285 und US-A-4,409,338 werden schäumbare Styrolpolymere beschrieben, die durch Polymerisation einer Lösung von 0,5 bis 4,0 Gew.-% Styrol-Butadien- bzw. Styrol-Butadien-Styrol-Blockcopolymeren in Styrol hergestellt werden und eine kurze Formkühlzeit aufweisen.

Die Elastizität der Schaumstoffe wird dadurch jedoch auf Grund der geringen Menge des zugesetzten Kautschuks nur unwesentlich erhöht.

Nach US-A-4,307,134 und US-A-4,333,970 werden auf Polystyrolperlen Schalen aus Polystyrol-Polybutadien-Copolymeren unter teilweiser Pfropfung aufpolymerisiert, die so hergestellten Perlen mit Treibmittel imprägniert und anschließend expandiert. Die so hergestellten Schaumstoffe weisen jedoch eine unregelmäßige Zellstruktur und unzureichende mechanische Eigenschaften auf.

GB-A-1,220,611 beschreibt eine schäumbare Polymerzusammensetzung mit erhöhter Ölbeständigkeit, die aus einem Polystyrol-Polyacrylnitril-Copolymer und einem Polybutadien-Elastomer besteht, wobei das Polystyrol-Polyacrylnitril-Copolymer im Elastomer dispergiert ist und das Treibmittel unter Quellung und teilweiser Lösung in die Elastomerphase absorbiert wird. Derartige Schaumstoffe weisen jedoch unzureichende mechanische Eigenschaften auf.

Aus DE 38 14 783 sind elastische Schaumstoffe bekannt, die aus verschäumten Interpolymerisaten aus Polyolefinen mit Styrol bestehen.

Allen beschriebenen Verfahren des Standes der Technik ist gemeinsam, daß das Treibmittel sehr schnell aus den Perlen diffundiert. Bereits nach wenigen Tagen kann der Treibmittelverlust so groß sein, daß eine ordnungsgemäße Verschäumung der Perlen nicht mehr möglich ist.

Die Aufgabe unserer Erfindung war es, expandierbare Styrolpolymerisate bereitzustellen, die zur Herstellung elastischer Schaumstoffe geeignet sind, auch nach längerer Lagerung keine signifikanten Treibmittelverluste aufweisen sowie recycelfähig sind.

Erfindungsgemäß wird die Aufgabe gelöst durch expandierbare Styrolpolymerisate für elastische Polystyrolschäume, enthaltend
a) 75 bis 98 Gew.-% Polystyrol und/oder eines Styrolcopolymerisates mit mindestens 50 % einpolymerisiertem Polystyrol,
b) 2 bis 25 Gew.-%, mindestens eines styrollöslichen Elastomeren,
c) 1 bis 15 Gew.-%, bezogen auf die Summe aus a) und b), eines niedrigsiedenden Treibmittels, sowie gegebenenfalls
d) übliche Zusatzstoffe in wirksamen Mengen,
wobei die unverschäumten Perlen eine Struktur aufweisen, bei der die Elastomerphase in Form von Zellteilchen in der Polystyrolphase dispergiert ist.

Gegenstand der Erfindung ist demzufolge expandierbare Styrolpolymerisate für elastische Polystyrolschäume, enthaltend
a) 75 bis 98 Gew.-% Polystyrol und/oder eines Styrolcopolymerisates mit mindestens 50 % einpolymerisiertem Polystyrol,
b) 2 bis 25 Gew.-%, mindestens eines styrollöslichen Elastomeren,
c) 1 bis 15 Gew.-%, bezogen auf die Summe aus a) und b), eines niedrigsiedenden Treibmittels, sowie gegebenenfalls
d) übliche Zusatzstoffe in wirksamen Mengen,
wobei die unverschäumten Perlen eine Struktur aufweisen, bei der die Elastomerphase in Form von Zellteilchen in der Polystyrolphase dispergiert ist.

Gegenstand der Erfindung sind weiterhin elastische Schaumstoffe der Dichte 5 - 70 g/l, enthaltend
a) 75 bis 98 Gew.-% Polystyrol und/oder eines Styrolcopolymerisates mit mindestens 50 Gew.-% einpolymerisiertem Polystyrol
b) 2 bis 25 Gew.-%, mindestens eines styrollöslichen Elastomeren sowie gegebenenfalls
c) übliche Zusatzstoffe in wirksamen Mengen,
die Herstellung der expandierbaren Styrolpolymerisate sowie Formkörper, hergestellt aus den elastischen Schaumstoffen.

Die expandierbaren Styrolpolymerisate enthalten als Komponente a) 75 bis 98 Gew.-%, vorzugsweise 85 bis 93 Gew.-% Polystyrol und/oder ein Styrolcopolymerisat mit mindestens 50 Gew.-%, vorzugsweise mindestens 80 Gew.-% einpolymerisiertem Polystyrol. Als Comonomere kommen z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylcarbazol, Maleinsäure(anhydrid) oder N-substituierten Methacrylsäureamide. Vorteilhaft enthält das Polystyrol eine geringe Menge eines Vernetzers einpolymerisiert, d.h. einer Verbindung mit mehr als einer, vorzugsweise 2 Doppelbindungen, wie Divinylbenzol, Butadien oder Butandioldiacrylat. Der Vernetzer wird im allgemeinen in Mengen von 0,005 bis 0,05 mol-%, bezogen auf Styrol, verwendet.

Zur Erzielung einer besonders hohen Expandierbarkeit ist es zweckmäßig, daß das Styrolpolymerisat ein mittleres Molekulargewicht M_{w} (Gewichtsmittel), gemessen nach der GPC-Methode, zwischen 100 000 und 200 000 aufweist, insbesondere zwischen 130 000 und 180 000. Verbesserte Verarbeitungseigenschaften weist der Schaumstoff dann auf, wenn die hochmolekulare Flanke des nach der GPC-Methode gemessenen Molekulargewichtsteilungskurve so steil ist, daß die Differenz der Mittelwerte (M_{Z+1}-M_{Z}) weniger als 150 000 beträgt. Die GPC-Methode ist beschrieben in G. Glöckler, Polymercharakterisierung, Chromatographische Methoden Band 17, Hüthig-Verlag, Heidelberg 1982. Die genannten Mittelwerte sind beschrieben in H.G. Elias, Makromoleküle, Hüthig-Verlag, Heidelberg 1971, Seiten 52-64.

Styrolpolymerisate, die die obengenannten mittleren Molgewichte aufweisen, können durch Mitverwendung von Reglern bei der Polymerisation erhalten werden. Als Regler verwendet man zweckmäßig 0,01 bis 1,5 Gew.-%, vorzugsweise 0,01 bis 0,5 Gew.-%, einer bromfreien organischen Verbindung mit einer Kettenübertragungskonstante K zwischen 0,1 und 50. Zweckmäßig wird der Regler während der Polymerisation erst bei einem Umsatz von 20 bis 90 % zugefügt, um eine steile hochmolekulare Flanke der Molekulargewichtsverteilungskurve zu erzielen.

Ein vorteilhaftes hohes Expansionsvermögen läßt sich auch dadurch erzielen, daß die Komponente a) 0,1 bis 10 Gew.-%, vorteilhaft 0,5 bis 10 Gew.-%, eines Styrolpolymeren mit einem mittleren Molekulargewicht (Gewichtsmittel) zwischen 500 und 5 000 enthält.

Weitere Details der Molekulargewichtsregelung bei der Herstellung expandierbarer Styrolpolymerisate sind der EP-B 106 129 zu entnehmen.

Styrolpolymerisate, die 0,1 bis 2 Gew.-%, vorzugsweise 0,15 bis 1,5 Gew.-%, einpolymerisiertes Acrylnitril enthalten, führen zu Schaumstoffen, die sich durch weitgehende Schrumpffreiheit auszeichnen. Auch ein Gemisch aus 95 bis 99,5 Gew.-% Polystyrol und 0,5 bis 5 Gew.-% eines styrollöslichen Styrol-Acrylnitril-Copolymeren zeigt diese Eigenschaften, wenn der Gesamtgehalt an Acrylnitril im Gemisch 0,1 bis 2 Gew.-%, vorzugsweise 0,15 bis 2 Gew.-% beträgt.

Styrolpolymerisate, die 3 bis 20 Gew.-%, vorzugsweise 5 bis 15 Gew.-% einpolymerisierbares Acrylnitril enthalten, führen zu Schaumstoffen mit hoher Ölbeständigkeit. Auch ein Gemisch aus 50 bis 85 Gew.-% Polystyrol und 15 bis 50 Gew.-% eines styrollöslichen Styrol-Acrylnitril-Copolymeren zeigt diese vorteilhafte Eigenschaft, wenn der Gesamtgehalt an Acrylnitril im Gemisch 3 bis 20 Gew.-%, vorzugsweise 5 bis 15 Gew.-%, beträgt. Die Herstellung derartiger Mischungen erfolgt auf einfache Weise dadurch, daß man vor der Polymerisation die vorgesehene Menge des Styrol-Acrylnitril-Copolymeren in Styrol löst.

Styrolpolymerisate, die 2 bis 15 Gew.-%, insbesondere 3 bis 12 Gew.-% Maleinsäure(anhydrid) als Comonomeres enthalten, führen zu Schaumstoffen, die sich durch hohe Wärmeformbeständigkeit auszeichnen. Vorteilhaft geht man dabei von einem Gemisch aus Polystyrol und einem handelsüblichen Styrol-Maleinsäureanhydrid-Copolymeren mit einem Maleinsäureanhydridgehalt von 15 bis 49 Gew.-% aus, das durch Lösen des Copolymeren in Styrol und anschließende Polymerisation leicht hergestellt werden kann.

Als Komponente b) kommen insbesondere styrollösliche Elastomere mit Glasübergangstemperaturen unter 20°C, vorzugsweise unter -10°C, insbesondere unter -20°C, zum Einsatz.

Das Elastomere ist im allgemeinen im wesentlichen unvernetzt, gegebenenfalls nur soweit vernetzt, daß die Löslichkeit im Styrol nicht beeinträchtigt ist.

Vorzugsweise werden für die erfindungsgemäßen Styrolpolymerisate Polybutadien-Kautschuke eingesetzt, insbesondere solche mit Molekulargewichten von 200 000 bis 300 000 und einem 1,4-cis-Anteil von < 50 % und einem 1,2-Vinyl-Anteil von 5 bis 20 % oder einem 1,4-cis-Anteil von > 50 % bis 99 % und einem 1,2-Vinyl-Anteil von < 5 % in der Polymerkette.

Der Anteil der Komponente b) beträgt 2 bis 25 Gew.-%, vorzugsweise 7 - 15 Gew.-%. Bei Unterschreitung dieses Gehaltes ist die Elastifizierung der Styrolpolymerisate unzureichend, bei einer Überschreitung kann es zu den bekannten Problemen des Treibmittelverlustes kommen.

Die erfindungsgemäßen expandierbaren Styrolpolymerisate weisen eine Zellteilchenmorphologie auf.

Die Elastomeren sind hierbei in Form von Zellteilchen in der Polystyrolphase dispergiert.

Dabei sollten die Zellteilchen Durchmesser von 0,1 bis 10 µ, insbesondere 0,5 bis 5 µm, aufweisen.

Zellteilchen mit größeren Durchmessern führen zu Treibmittelverlusten sowie zu ungleichmäßigen Schaumstrukturen.

Ausführungen zur Morphologie von elastomermodifizierten Styrolpolymerisaten finden sich in: Echte, Rubber-Toughened Styrene Polymers, Advances in Chemistry Series No. 222, 1989.

Die expandierbaren Styrolpolymerisate enthalten in homogener Verteilung als Komponente c) 2 bis 15 Gew.-%, vorzugsweise 3 bis 10 Gew.-% eines niedrig siedenden Treibmittels. Die Gew.-% beziehen sich auf die Summe der Komponenten a) und b). Die Treibmittel sollen das Polystyrol nicht lösen, aber in Polystyrol löslich sein. Der Siedepunkt soll unter dem Erweichungspunkt des Polystyrols liegen. Geeignete Treibmittel sind beispielsweise Propan, Butan, Pentan, Hexan, Cyclopentan, Cyclohexan, Octan, Dichlordifluormethan, Trifluorchlormethan und 1,1,1-Difluorchlorethan. Vorzugsweise wird Pentan verwendet.

Die expandierbaren Styrolpolymerisate können ferner übliche Zusatzstoffe in wirksamen Mengen enthalten, wie Farbstoffe, Füllstoffe, Stabilisatoren, Flammschutzmittel, Synergisten, Keimbildner, Gleitmittel, Antistatika, beim Verschäumen antiverklebend wirkende Stoffe und Mittel zur Verkürzung der Entformzeit beim Ausschäumen.

Als Zusatzstoffe sind auch Poly-(2,6-dimethyl)-1,4-phenylenether und Poly-1,4-phenylensulfid geeignet. In Mengen von 1 bis 20 Gew.-%, bezogen auf die Komponente a) bewirken diese Zusätze eine Erhöhung der Wärmeformbeständigkeit des Schaumstoffs.

Die expandierbaren Styrolpolymerisate liegen im allgemeinen in Form von Partikeln, d.h. in Perlform oder Granulatform vor und haben vorteilhaft einen mittleren Durchmesser von 0,1 bis 6 mm, insbesondere 0,4 bis 3 mm.

Die Herstellung der erfindungsgemäßen Styrolpolymerisate kann beispielsweise durch Vermischen der Komponenten a), b) und gegebenenfalls auch c) in der Schmelze, zumeist in einem Extruder erfolgen, wobei bei Zugabe von c) der Strang nach dem Auspressen so rasch abgekühlt werden muß, daß kein Aufschäumen erfolgt. Anschließend wird das erhaltene Styrolpolymerisat zerkleinert, zumeist durch Granulierung.

Vorteilhafterweise erfolgt die Herstellung der erfindungsgemäßen Styrolpolymerisate jedoch durch Interpolymerisation. Hierbei wird das Elastomere in Styrol gelöst und diese Lösung nach an sich bekannten Verfahren, zumeist unter Zusatz von radikalischen Initiatoren oder durch Wärmezufuhr, polymerisiert.

Die Polymerisation kann nach der üblichen Massepolymerisation erfolgen.

Die Herstellung der erfindungsgemäßen expandierbaren Styrolpolymerisate ist jedoch auch durch Suspensionspolymerisation möglich.

Hierbei ist es jedoch zweckmäßig, die Lösung des Elastomeren in Styrol zunächst bis zu einem Umsatz von etwa 30 % in Masse zu polymerisieren und diese Reaktionsmischung, gegebenenfalls in Gegenwart eines Plastifizierungsmittels, wie Paraffinöl, wie üblich in wäßrige Suspension zu überführen und so die Polymerisation fortzusetzen.

Das Treibmittel kann hierbei im Verlauf der Polymerisation zugesetzt werden.

In den meisten Fällen wird das Treibmittel jedoch dem fertigen Polymerisat zugefügt.

Das kann beispielsweise durch Zusatz des Treibmittels in das geschmolzene Polymerisat erfolgen, beispielsweise in einem Extruder, wobei auch hier ein Aufschäumen verhindert werden muß. Vorteilhafterweise erfolgt der Treibmittelzusatz jedoch nach dem Imprägnierverfahren.

Dazu müssen die Polymerisate auf eine Teilchengröße von vorzugsweise 0,5 x 1 mm bis 4 x 4 mm gebracht werden. Dies erfolgt zweckmäßigerweise mittels Extrusion mit nachfolgender Granulierung. Die Granulate liegen, je nach der Art des Abschlages, zumeist in Form von Partikeln, d.h. in Perlform oder Granulatform, vor.

Zur Imprägnierung wird das Granulat in einer Flüssigkeit, zumeist Wasser, in Gegenwart der üblichen Hilfs- und Zusatzstoffe in einem Druckbehälter suspendiert, dieser inertisiert, und auf eine Temperatur gebracht, die oberhalb des Erweichungspunktes, jedoch unterhalb des Schmelzpunktes des Polymeren liegt. Bei dieser Temperatur wird das Treibmittel aufgepreßt. Nach dem Abkühlen und Entspannen wird das imprägnierte Granulat abgetrennt, gereinigt und getrocknet, wobei das Trocknen vorzugsweise bei Raumtemperatur oder Temperaturen von 30 bis 50°C erfolgt, beispielsweise in einem Luftstrom. Das Imprägnierverfahren ist beispielsweise in EP-A 343 473 beschrieben.

Weitere Angaben zu den üblichen Herstellungsverfahren findet sich beispielsweise in Kunststoffhandbuch, Band 5, Polystyrol, herausgegeben von R. Vieweg und G. Danmiller, Carl-Hanser-Verlag, München, 1969.

Für die Herstellung von Schaumstoffen werden die expandierbaren Styrolpolymerisate in bekannter Weise durch Erhitzen auf Temperaturen oberhalb ihres Erweichungspunkts, beispielsweise mit Heißluft oder vorzugsweise mit Dampf expandiert. Die erhaltenen Schaumstoffpartikel können nach dem Abkühlen und gegebenenfalls einer Zwischenlagerung durch erneutes Erhitzen weiter aufgeschäumt werden. Sie können anschließend in bekannter Weise in nicht gasdicht schließenden Formen zu Formteilen verschweißt werden.

Die erhaltenen Schaumstoffe weisen eine Dichte von etwa 0,01 bis 0,1 g/cm³ auf. Auf Grund ihrer Elastizität finden sie insbesondere Verwendung für stoßdämpfende Verpackungen, als Kernmaterial für Kraftfahrzeugstoßstangen, zur Innenauskleidung von Kraftfahrzeugen, als Polstermaterial, sowie als Wärme- und Schalldämmaterial.

Sie besitzen ein hervorragendes Rückstellvermögen, das bis zu 90 % bei viermaliger Stauchung beträgt (bestimmt nach DIN 53 577) . Damit sind sie herkömmlichen Styrolpolymeren deutlich überlegen.

Die Treibmittelverluste der unverschäumten Perlen sind sehr gering. Auch nach einer Lagerung von mehreren Wochen war eine Verschäumung noch problemlos möglich.

Die vorgeschäumten Perlen sind von einer gleichmäßigen Zellstruktur und verschweißen beim Formprozeß ohne Bildung von Lunkern. Die so hergestellten Formkörper weisen eine ausgezeichnete Wärmeformbeständigkeit auf.

Darüber hinaus besitzen die erfindungsgemäßen Schaumstoffe eine überraschend gute Wärmedämmung, die Wärmeleitfähigkeit liegt bis zu 10 % niedriger ist als die konventioneller Polystyrol-Partikelschäume. Die Schäume und Formkörper sind problemlos recycelbar.

Die Erfindung soll an nachfolgenden Beispielen näher erläutert werden:

### Beispiel 1

8 Gew.-Teile eines Polybutadiens mit einem Molekulargewicht (M_{W}) von 250 000 und einem medium-cis-Aufbau (Gehalt an 1,4-cis-Strukturen 30,4 %) wurde in 92 Gew.-Teilen Styrol gelöst und nach bekanntem Verfahren radikalisch polymerisiert.

Das entstandene Polymerisat hatte eine Viskositätszahl von 70 cm³/g, eine Erweichungstemperatur (Vicat B/50) von 93°C sowie einen Schmelzindex von 3,7 cm³/10 min bei 200°C und 10 kg.

Die Polybutadienphase war in Form von Zellteilchen mit Durchmesser von 0,5 - 2,5 µm in der Polystyrolphase verteilt.

Das Polymerisat wurde in einem Doppelschneckenextruder der Fa. Werner & Pfleiderer, Stuttgart, in bekannter Weise bei etwa 180°C aufgeschmolzen und durch eine Düsenplatte mit Bohrungen von 1 mm Durchmesser gepreßt. Die Stränge wurden in einem Wasserbad zum Erstarren gebracht und anschließend mittels rotierender Messer auf eine Größe 1 x 1 x 3 mm granuliert.

6700 g dieses Granulates wurden zusammen mit 21.300 g vollentsalztem Wasser, 76 g Natriumpyrophosphat, 155 Magnesiumsulfat-Heptahydrat und 50 g einer 40 %igen Lösung eines Alkylbenzolsulfonates (Mersolat® K 30, Bayer AG) in einen 50 l fassenden Rührkessel gegeben. Dieser wurde verschlossen, 2 x durch Aufpressen von 1 atm Stickstoff inertisiert, und unter Rühren bei 250 Upm auf 120°C aufgeheizt. Nach Erreichen von 120°C wurden während einer Dauer von 15 Minuten 670 g = 10 % (b.a. Polystyrol) eines 4:1-Gemisches aus n- und iso-Pentan in den Kessel gedrückt, und für weitere 10 Stunden bei 120°C gerührt. Nach Abkühlen und Entspannen wurde der Kesselinhalt abgelassen und die erhaltenen Perlen aufgefangen. Diese wurden 2 x mit vollentsalztem Wasser gewaschen und durch Hindurchsaugen von Umgebungsluft (ca. 23°C) auf einer Vakuumnutsche getrocknet.

Die oberflächlich trockenen Perlen besaßen danach einen Pentangehalt von 6,5 (Gew.-)% und einen Innenwassergehalt von 0,25 (Gew.-)%. Sie wurden für mehrere Tage auf einem offenen Blech ausgelegt, um die Veränderung der Schaumfähigkeit zu untersuchen. Das Vorschäumen geschah mittels Wasserdampfes unter Atmosphärendruck; die Herstellung von Formkörpern in einer von oben und unten bedampfbaren Presse der Abmessungen 20 x 20 x 4 cm.

Die Perlen zeigten nach eintägiger Lagerung eine minimale Schüttdichte von 14,2 g/l nach 5-minütiger Bedampfung; die Zellstruktur war gleichmäßig und fein. Nach 14-tägigem offenem Auslegen betrug die minimale Schüttdichte noch 15,6 g/l nach 5-minütiger Bedampfung; die Zellstruktur war geringfügig feiner.

Aus den vorgeschäumten Perlen wurden Formkörper der Dichte 20 g/l hergestellt. Diese wiesen eine sehr gute Verschweißung auf, zeigten eine Rückstellung von 90 % nach viermaliger Stauchung um 50 %, gemessen nach DIN 53 577, und eine überraschenderweise um 7 % gegenüber Styropor® F14 (BASF Aktiengesellschaft) gleicher Dichte reduzierte Wärmeleitfähigkeit, gemessen nach Poensgen (DIN 52 616).

### Beispiel 2

9 Gew.-Teile eines Polybutadiens mit einem Molekulargewicht von 250 000 (M_{W}) und einem Anteil von 1,4-cis-Strukturen von 98 % wurden in 91 Gew.-Teilen Styrol gelöst und wie in Beispiel 1 beschrieben polymerisiert und granuliert.

Das entstandene Polymerisat hatte eine Viskositätszahl von 80 cm³/g, eine Erweichungstemperatur (Vicat B/50) von 95°C sowie einen Schmelzindex von 3,4 cm³/10 min bei 200°C und 10 kg. Die Polybutadienphase war in Form von Zellteilchen mit 0,5 bis 2,5 µm Durchmesser in der Polystyrolphase verteilt.

6000 g des Granulates wurden wie in Beispiel 1 beschrieben mit 720 g des Gemisches aus n- und iso-Pentan imprägniert und wie in Beispiel 1 aufgearbeitet und verschäumt.

Der Pentangehalt nach der Oberflächen-Trocknung betrug 8,6 %, der Innenwassergehalt lag bei 0,04 %. Die minimale Schüttdichte nach 1 Tag Ausliegen wurde zu 11,3 g/l (nach 7-minütigem Vorschäumen) bestimmt; sie betrug nach 14-tägigem offenem Ausliegen noch 13,6 g/l. Die Zellstruktur war in beiden Fällen gleichmäßig und fein.

Wie in Beispiel 1 wurden auch hier Formkörper der Dichte 20 g/l hergestellt. Die Verschweißung war hervorragend; die Rückstellung nach viermaliger Stauchung um 50 % betrug 90 % und die Wärmeleitfähigkeit war ebenso wie bei den Formkörpern gemäß Beispiel 1 um etwa 7 % gegenüber Styropor® F14 reduziert.

### Beispiel 3

13 Gew.-Teile eines Polybutadiens wie in Beispiel 1 verwendet wurden in 87 Gew.-Teilen Styrol gelöst und wie in Beispiel 1 beschrieben polymerisiert.

Das erhaltene Polymerisat hatte eine Viskositätszahl von 68 cm³/g, eine Erweichungstemperatur (Vicat B/50) von 95°C sowie einem Schmelzindex von 2,4 cm³/10 min. Die Polybutadienphase war als Zellteilchen mit 0,5 bis 2,5 µm Durchmesser in der Polystyrolphase verteilt.

Es wurde wie in Beispiel 1 beschrieben auf eine Größe von etwa 2 x 2 x 2 mm granuliert.

6000 g des Granulates wurden wie in Beispiel 1 beschrieben mit 600 g des Gemisches aus n- und iso-Pentan imprägniert und wie in Beispiel 1 beschrieben aufgearbeitet und verschäumt.

Pentan- und Wassergehalt lagen nach Aufarbeitung bei 6,5 Gew.-% bzw. 0,38 Gew.-%. Die minimale Schüttdichte betrug nach 1 bzw. 3 Tagen offener Lagerung 14,2 g/l bzw. 17,4 g/l (nach 7- bzw. 4-minütigem Vorschäumen). Die Schaumstruktur war gleichmäßig feinzellig und änderte sich durch längeres Auslegen/Konditionieren nicht wesentlich. Die aus vorgeschäumten Perlen hergestellten Formkörper wiesen bei einer Dichte von 22 g/l eine Rückstellung nach viermaliger Stauchung um 50 % von 95 % auf; ihre Wärmeleitfähigkeit lag um 5 % unter der von Styropor® F 14 gleicher Dichte.

### Beispiel 4

14 Gew.-Teile Polybutadien, wie in Beispiel 2, wurden in 86 Gew.-Teilen Styrol gelöst und, wie in Beispiel 1 beschrieben, polymerisiert.

Das Polymerisat hatte eine Viskositätszahl von 69 cm³/g, eine Erweichungstemperatur (Vicat B/50) von 91°C sowie einen Schmelzindex von 1,6 cm³/10 min. bei 200° und 10 kg. Die Polybutadienphase war in Form von Zellteilchen mit 0,5 bis 3 µm Durchmesser in der Polystyrolphase verteilt. Das Polymerisat wurde auf eine Größe von 2 x 2 x 2 mm granuliert.

6000 g des Granulates wurden wie in Beispiel 1 beschrieben mit 600 g des Gemisches aus n- und iso-Pentan imprägniert, aufgearbeitet und verschäumt.

Das Produkt enthielt nach Aufarbeitung und Oberflächen-Trocknung 5,9 Gew.-% Pentan und 0,25 Gew.-% Wasser. Die minimale Schüttdichte nach 1 Tag Auslegen betrug 13,1 g/l nach 5-minütigem Vorschäumen. Nach 3-tägiger offener Lagerung konnte noch eine minimale Schüttdichte von 17,8 g/l nach 4 Minuten Vorschäumen erhalten werden. Die Zellstruktur war gleichmäßig mittelfein. Aus vorgeschäumten Perlen hergestellte Formkörper wiesen bei einer Rohdichte von 23 g/l eine Rückstellung nach 4-maliger Stauchung auf 50 % von über 80 % auf; die Wärmeleitfähigkeit lag etwa 5 % niedriger als bei Styropor® F 14 gleicher Dichte.

### Vergleichsbeispiel 1

In einem druckfesten Rührkessel wurde eine Mischung aus 200 Teilen Wasser, 0,1 Teil Natriumpyrophosphat, 100 Teilen einer Lösung von 9 Teilen Polyisobutylen mit einem Staudinger-Index von 28 (cm³/g), Glasübergangstemperatur -64°C (Oppanol®B 10 der BASF Aktiengesellschaft) in 91 Teilen Styrol, 7,5 Teilen Pentan, 0,15 Teilen tert.-Butylperoxid, 0,45 Teilen Benzoylperoxid und 4 Teilen einer 10 %igen wäßrigen Lösung von Polyvinylpyrrolidon unter Rühren auf 90°C erhitzt, 5 Stunden bei 90°C gehalten und anschließend 2 Stunden auf 100°C und weitere 2 Stunden auf 120°C erhitzt. Nach dem Abkühlen wurde das erhaltene Perlpolymerisat mit einem mittleren Teilchendurchmesser von ca. 1 mm von der wäßrigen Phase abgetrennt, gewaschen und getrocknet.

Das erhaltene expandierbare Styrolpolymerisat wurde in einem handelsüblichen Rührvorschäumer, Typ Rauscher, mit strömendem Wasserdampf auf ein Schüttgewicht von ca. 30 g/l vorgeschäumt. Nach 24 Stunden Zwischenlagerung wurden die Schaumstoffpartikel in einer Blockform, Typ Rauscher, durch Bedampfung mit Wasserdampf und einem Druck von 1,8 bar zu einem Block der Dichte ca. 30 g/l verschweißt.

Die Perlen besaßen nach der Aufarbeitung einen Pentan- bzw. Wasser-Gehalt von 5,6 Gew.-% bzw. 1 Gew.-%. Nach einem Tag offener Lagerung betrug die minimale Schüttdichte 32,4 g/l nach 10 Minuten Vorschäumen. Nach 3 Tagen waren keine Schaumperlen mehr erhältlich; das Treibmittel hatte sich bis auf einen nicht mehr wirksamen Rest von 1,8 % verflüchtigt.

Aus den Schaumperlen hergestellte Formkörper (Dichte 30 g/l) zeigen im Dünnschnitt eine ungleichmäßige Schaumstruktur (feine neben groben Zellen, Lunker); im Stauchtest (4-malige Stauchung bis 50 %) lag die maximale Rückstellung bei 75 - 70 %.

Die Wärmeleitfähigkeit lag knapp unter dem Niveau von normalem Styropor® F 14 gleicher Dichte.

### Vergleichsbeispiel 2

6000 g eines handelsüblichen, durch anionische Polymerisation einer Mischung von 21 % Butadien und 79 % Styrol erhältlichen, transparenten schlagfesten Polystyroles mit einem Schmelzindex von 11 cm³/10 min bei 200°C/5 kp und einer Erweichungstemperatur (Vicat B/50) von 59°C (Styrolux 684 D), das eine durch (etwa 25 nm) dünne Lamellen aus Polystyrol und Polybutadien charakterisierte Morphologie aufwies, wurde als Granulat mit einem Teilchendurchmesser ca. 2 x 2 x 2 mm wie in Beispiel 1 beschrieben mit 600 g = 10 % Treibmittel imprägniert.

Nach Aufarbeitung hatte das Produkt einen Pentan-Gehalt von 3,3 Gew.-%; der Anteil an Innenwasser betrug 2,32 Gew.-%. Nach 1-tägiger offener Lagerung war selbst nach längerer Bedampfung (10 Minuten) kein nennenswertes Schäumen zu beobachten (Schüttdichte 413 g/l).

Eine Prüfung der Schaumstoffeigenschaften war daher nicht möglich.

## Patentansprüche

1. Expandierbare Styrolpolymerisate für elastische Polystyrolschäume, enthaltend
a) 75 bis 98 Gew.-% Polystyrol und/oder eines Styrolcopolymerisates mit mindestens 50 % einpolymerisiertem Polystyrol,
b) 2 bis 25 Gew.-%, mindestens eines styrollöslichen Elastomeren,
c) 1 bis 15 Gew.-%, bezogen auf die Summe aus a) und b), eines niedrigsiedenden Treibmittels, sowie gegebenenfalls
d) übliche Zusatzstoffe in wirksamen Mengen,
wobei die unverschäumten Perlen eine Struktur aufweisen, bei der die Elastomerphase in Form von Zellteilchen in der Polystyrolphase dispergiert ist.

2. Expandierbare Styrolpolymerisate nach Anspruch 1, dadurch gekennzeichnet, daß sie 85 bis 93 Gew.-% der Komponente a) und 7 bis 15 Gew.-% der Komponente b) enthalten.

3. Expandierbare Styrolpolymerisate nach Anspruch 1, dadurch gekennzeichnet, daß als Komponente b) styrollösliche Elastomere mit einer Glasübergangstemperatur < 20°C eingesetzt werden.

4. Expandierbare Styrolpolymerisate nach Anspruch 1, dadurch gekennzeichnet, daß die Komponente b) Polybutadien ist.

5. Expandierbare Styrolpolymerisate nach Anspruch 1, dadurch gekennzeichnet, daß die Zellteilchen einen Durchmesser von 0,1 bis 10 Mikrometer haben.

6. Expandierbare Styrolpolymerisate nach Anspruch 1, dadurch gekennzeichnet, daß die Zellteilchen einen Durchmesser von 0,5 bis 5 Mikrometer haben.

7. Verfahren zur Herstellung von expandierbaren Styrolpolymerisaten nach Anspruch 1, dadurch gekennzeichnet, daß man das Elastomere b) in Styrol löst, diese Lösung polymerisiert und das Polymerisat mit Treibmittel imprägniert.

8. Elastische Schaumstoffe der Dichte 5 bis 70 g/l, enthaltend
a) 50 bis 98 Gew.-% Polystyrol und/oder eines Styrolcopolymerisates mit mindestens 50 Gew.-% einpolymerisiertem Polystyrol
b) 2 bis 50 Gew.-%, mindestens eines styrollöslichen Elastomeren sowie gegebenenfalls
c) übliche Zusatzstoffe in wirksamen Mengen.

9. Verfahren zur Herstellung von elastischen Schaumstofformteilen, dadurch gekennzeichnet, daß man expandierbare Styrolpolymerisate nach Anspruch 1 in Partikelform durch Erhitzen bei einer Temperatur oberhalb des Erweichungspunktes expandiert und die so erhaltenen Schaumstoffpartikel in nicht gasdicht abschließenden Formen durch Erhitzen miteinander verschweißt.
